# EUROPEAN PATENT APPLICATION

(11) **EP 4 611 329 A1**
(43) Date of publication of application: **03.09.2025**
(21) Application number: 23926673.7
(22) Date of filing: 10.03.2023
(51) Int. Cl.: H04L 41/0663

(54) **MASTER-SLAVE SWITCHING METHOD AND APPARATUS, AND GATEWAY DEVICE AND STORAGE MEDIUM**

(71) Applicant: New H3C Technologies Co., Ltd., Hangzhou, Zhejiang 310052 (CN)
(72) Inventor: QIU, Yuanxiang, Beijing 100102 (CN)
(74) Representative: Zimmermann & Partner Patentanwälte mbB
(86) International application number: PCT/CN2023/080865
(87) International publication number: WO 2024/187314

(57) **Abstract**

Examples of the present disclosure provide a method and an apparatus for primary-backup switching, a gateway device and a storage medium, which relate to the technical field of network communications and are applied to a gateway device. The method comprises: acquiring a priority value of a primary relay device and a priority value of a backup relay device; if the relationship between the priority value of the primary relay device and the priority value of the backup relay device meets a preset switching condition, switching between the primary relay device and the backup relay device. The application of the example of the present disclosure can improve the multicast service quality.

## Description

### Technical field

The present disclosure relates to the technical field of network communications, in particular to a method and an apparatus for primary-backup switching, a gateway device and a storage medium.

### Background

Automatic Multicast Tunneling (AMT) protocols can enable multicast receivers who do not support native multicast protocols to connect to a multicast source, and then to receive multicast traffic from the multicast source.

AMT protocols adopt relay deployment, a gateway can determine the nearest relay device by anycast, and then the gateway joins a multicast group maintained by the relay device as a multicast member, so that an AMT tunnel between the gateway and the relay device is successfully established. Then, after receiving the multicast data from the multicast source, the relay device can send the multicast data to the gateway through the AMT tunnel, and the gateway can send the multicast data to the multicast receiver.

After the AMT tunnel is successfully established, if the relay device is topologically closest to the gateway and the route between the relay device and the gateway is accessible, the gateway will always obtain multicast data through the relay device. In this case, if the forwarding path between the relay device and the multicast source fails or the transmission quality decreases, the gateway will not be able to obtain the multicast data transmitted by the relay device in time, which will further lead to the multicast receiver not being able to obtain the multicast data in time and thereby affect the multicast service quality.

### Summary

Examples of the present disclosure provide a method and an apparatus for primary-backup switching, a gateway device and a storage medium, so as to avoid that multicast receivers are unable to obtain multicast data in time and thus multicast service quality is affected. The specific technical solution is as follows.

In a first aspect, an example of the present disclosure provides a method for primary-backup switching, which is applied to a gateway device, including:
acquiring a priority value of a primary relay device and a priority value of a backup relay device, wherein the priority value of a relay device is used for representing multicast service quality of the relay device;
if a relationship between the priority value of the primary relay device and the priority value of the backup relay device meets a preset switching condition, switching between the primary relay device and the backup relay device.

In a possible implementation, the method further comprises:
after the gateway device is online, sending Relay Discovery packets to a plurality of relay devices respectively, wherein each of the Relay Discovery packets comprises a different anycast address;
if a Relay Advertisement packet sent by a relay device is received within a first preset duration, taking the relay device that sent the Relay Advertisement packet as the primary relay device; or, if a plurality of Relay Advertisement packets sent by a plurality of relay devices are received within the first preset duration, selecting a relay device from the plurality of relay devices as the primary relay device, wherein the Relay Advertisement packet sent by the primary relay device carries a maximum priority value;
establishing an AMT tunnel with the primary relay device.

In a possible implementation, acquiring the priority value of the primary relay device and the priority value of the backup relay device comprises:
sending a Request packet to the primary relay device every other second preset duration;
receiving a Membership Query packet sent by the primary relay device, wherein the Membership Query packet comprises the priority value of the primary relay device;
sending a Relay Discovery packet to the backup relay device every other first preset duration;
receiving a Relay Advertisement packet sent by the backup relay device, wherein the Relay Advertisement packet comprises the priority value of the backup relay device.

In a possible implementation, switching between the primary relay device and the backup relay device if the relationship between the priority value of the primary relay device and the priority value of the backup relay device meets the preset switching condition, comprises:
if the priority value of the backup relay device is greater than the priority value of the primary relay device, switching between the primary relay device and the backup relay device; or,
if the priority value of the backup relay device is greater than the priority value of the primary relay device, starting a primary-backup switching timer, and if a last acquired priority value of the backup relay device is greater than a last acquired priority value of the primary relay device before the primary-backup switching timer expires, switching between the primary relay device and the backup relay device; or,
if the priority value of the backup relay device is greater than the priority value of the primary relay device, starting the primary-backup switching timer; if the acquired priority value of the backup relay device is always greater than the acquired priority value of the primary relay device before the primary-backup switching timer expires, switching between the primary relay device and the backup relay device.

In a possible implementation, switching between the primary relay device and the backup relay device comprises:
sending a Request packet to the backup relay device;
if the Membership Query packet sent by the backup relay device is received, sending a Membership Update packet to the backup relay device, and stopping a periodic query keep-alive timer for the primary relay device, wherein the periodic query keep-alive timer expires when the second preset duration is reached;
if no Membership Query packet sent by the primary relay device is received within a third preset duration, deleting information about an AMT tunnel with the primary relay device.

In a possible implementation, after deleting the information about the AMT tunnel with the primary relay device, the method further comprises:
sending a Relay Discovery packet to the primary relay device every other first preset duration;
after the Membership Query packet sent by the backup relay device is received, the method further comprises:
   sending a Request packet to the backup relay device every other second preset duration.

In a possible implementation, the Membership Query packet comprises a first flag bit field and a priority field, and when the first flag bit field takes a first value, it indicates that the priority field carries the priority value of the primary relay device.

In a possible implementation, the Membership Query packet further comprises a second flag bit field;
if the second flag bit field takes the first value, it indicates that the priority field is located behind and adjacent to a gateway address field;
if the second flag bit field takes a second value, it indicates that the priority field is located behind and adjacent to encapsulation information of an ordinary query message.

In a possible implementation, the Relay Advertisement packet comprises a priority field, which is used to carry the priority value of the backup relay device.

In a possible implementation, the priority field occupies 8 reserved bits, and when the priority field takes a value of 0, it indicates that the priority field does not carry a priority value.

In a possible implementation, the priority value of a relay device is determined based on health parameters of the relay device, wherein the health parameters comprise any one or more of the following:
the number of accessible multicast sources;
network quality with the multicast source(s);
failure ratio(s) of transmission path(s) with the multicast source(s);
routing link quality with the multicast source(s).

In a first aspect, an example of the present disclosure provides an apparatus for primary-backup switching, which is applied to a gateway device, comprising:
an acquiring module, to acquire a priority value of a primary relay device and a priority value of a backup relay device, wherein the priority value of a relay device is used for representing multicast service quality of the relay device;
a switching module to, if a relationship between the priority value of the primary relay device and the priority value of the backup relay device meets a preset switching condition, switch between the primary relay device and the backup relay device.

In a possible implementation, the apparatus further comprises:
a sending module to send, after the gateway device is online, Relay Discovery packets to a plurality of relay devices respectively, wherein each of the Relay Discovery packets comprises a different anycast address;
a selecting module to, if a Relay Advertisement packet sent by a relay device is received within a first preset duration, take the relay device that sent the Relay Advertisement packet as the primary relay device; or, if a plurality of Relay Advertisement packets sent by a plurality of relay devices are received within the first preset duration, select a relay device from the plurality of relay devices as the primary relay device, wherein the Relay Advertisement packet sent by the primary relay device carries a maximum priority value;
an establishing module, to establish an AMT tunnel with the primary relay device.

In a possible implementation, the acquiring module is specifically to:
send a Request packet to the primary relay device every other second preset duration;
receive a Membership Query packet sent by the primary relay device, wherein the Membership Query packet comprises the priority value of the primary relay device;
send a Relay Discovery packet to the backup relay device every other first preset duration;
receive a Relay Advertisement packet sent by the backup relay device, wherein the Relay Advertisement packet comprises the priority value of the backup relay device.

In a possible implementation, the switching module is specifically to:
if the priority value of the backup relay device is greater than the priority value of the primary relay device, switch between the primary relay device and the backup relay device; or,
if the priority value of the backup relay device is greater than the priority value of the primary relay device, start a primary-backup switching timer, and if a last acquired priority value of the backup relay device is greater than a last acquired priority value of the primary relay device before the primary-backup switching timer expires, switch between the primary relay device and the backup relay device; or,
if the priority value of the backup relay device is greater than the priority value of the primary relay device, start the primary-backup switching timer; if the acquired priority value of the backup relay device is always greater than the acquired priority value of the primary relay device before the primary-backup switching timer expires, switch between the primary relay device and the backup relay device.

In a possible implementation, the switching module is specifically to:
send a Request packet to the backup relay device;
if the Membership Query packet sent by the backup relay device is received, send a Membership Update packet to the backup relay device, and stop a periodic query keep-alive timer for the primary relay device, wherein the periodic query keep-alive timer expires when the second preset duration is reached;
if no Membership Query packet sent by the primary relay device is received within a third preset duration, delete information about an AMT tunnel with the primary relay device.

In a possible implementation, the switching module is further to send a Relay Discovery packet to the primary relay device every other first preset duration;
the switching module is further to send a Request packet to the backup relay device every other second preset duration.

In a possible implementation, the Membership Query packet comprises a first flag bit field and a priority field, and when the first flag bit field takes a first value, it indicates that the priority field carries the priority value of the primary relay device.

In a possible implementation, the Membership Query packet further comprises a second flag bit field;
if the second flag bit field takes the first value, it indicates that the priority field is located behind and adjacent to a gateway address field;
if the second flag bit field takes a second value, it indicates that the priority field is located behind and adjacent to encapsulation information of an ordinary query message.

In a possible implementation, the Relay Advertisement packet comprises a priority field, which is used to carry the priority value of the backup relay device.

In a possible implementation, the priority field occupies 8 reserved bits, and when the priority field takes a value of 0, it indicates that the priority field does not carry a priority value.

In a possible implementation, the priority value of a relay device is determined based on health parameters of the relay device, wherein the health parameters comprise any one or more of the following:
the number of accessible multicast sources;
network quality with the multicast source(s);
failure ratio(s) of transmission path(s) with the multicast source(s);
routing link quality with the multicast source(s).

In a third aspect, an example of the present disclosure provides a gateway device, comprising:
a processor;
a transceiver;
a machine-readable storage medium having stored therein machine-executable instructions that can be executed by the processor to cause the processor to perform following operations of:
   acquiring a priority value of a primary relay device and a priority value of a backup relay device, wherein the priority value of a relay device is used for representing multicast service quality of the relay device;
   if a relationship between the priority value of the primary relay device and the priority value of the backup relay device meets a preset switching condition, switching between the primary relay device and the backup relay device.

In a possible implementation, the machine-executable instructions further cause the processor to perform following operations of:
after the gateway device is online, sending Relay Discovery packets to a plurality of relay devices respectively through the transceiver, wherein each of the Relay Discovery packets comprises a different anycast address;
if a Relay Advertisement packet sent by a relay device is received within a first preset duration through the transceiver, taking the relay device that sent the Relay Advertisement packet as the primary relay device; or, if a plurality of Relay Advertisement packets sent by a plurality of relay devices are received within the first preset duration through the transceiver, selecting a relay device from the plurality of relay devices as the primary relay device, wherein the Relay Advertisement packet sent by the primary relay device carries a maximum priority value;
establishing an AMT tunnel with the primary relay device.

In a possible implementation, the machine-executable instructions further cause the processor to perform following operations of:
sending a Request packet to the primary relay device through the transceiver every other second preset duration ;
receiving a Membership Query packet sent by the primary relay device through the transceiver, wherein the Membership Query packet comprises the priority value of the primary relay device;
sending a Relay Discovery packet to the backup relay device through the transceiver every other first preset duration;
receiving a Relay Advertisement packet sent by the backup relay device through the transceiver, wherein the Relay Advertisement packet comprises the priority value of the backup relay device.

In a possible implementation, the machine-executable instructions further cause the processor to perform following operations of:
if the priority value of the backup relay device is greater than the priority value of the primary relay device, switching between the primary relay device and the backup relay device; or,
if the priority value of the backup relay device is greater than the priority value of the primary relay device, starting a primary-backup switching timer, and if a last acquired priority value of the backup relay device is greater than a last acquired priority value of the primary relay device before the primary-backup switching timer expires, switching between the primary relay device and the backup relay device; or,
if the priority value of the backup relay device is greater than the priority value of the primary relay device, starting the primary-backup switching timer; if the acquired priority value of the backup relay device is always greater than the acquired priority value of the primary relay device before the primary-backup switching timer expires, switching between the primary relay device and the backup relay device.

In a possible implementation, the machine-executable instructions further cause the processor to perform following operations of:
sending a Request packet to the backup relay device through the transceiver;
if the Membership Query packet sent by the backup relay device is received through the transceiver, sending a Membership Update packet to the backup relay device through the transceiver, and stopping a periodic query keep-alive timer for the primary relay device, wherein the periodic query keep-alive timer expires when the second preset duration is reached;
if no Membership Query packet sent by the primary relay device is received through the transceiver within a third preset duration, deleting information about an AMT tunnel with the primary relay device.

In a possible implementation, the machine-executable instructions further cause the processor to perform following operations of:
sending a Relay Discovery packet to the primary relay device through the transceiver every other first preset duration;
wherein the machine-executable instructions further cause the processor to perform a following operation of:
   sending a Request packet to the backup relay device through the transceiver every other second preset duration.

In a possible implementation, the Membership Query packet comprises a first flag bit field and a priority field, and when the first flag bit field takes a first value, it indicates that the priority field carries the priority value of the primary relay device.

In a possible implementation, the Membership Query packet further comprises a second flag bit field;
if the second flag bit field takes the first value, it indicates that the priority field is located behind and adjacent to a gateway address field;
if the second flag bit field takes a second value, it indicates that the priority field is located behind and adjacent to encapsulation information of an ordinary query message.

In a possible implementation, the Relay Advertisement packet comprises a priority field, which is used to carry the priority value of the backup relay device.

In a possible implementation, the priority field occupies 8 reserved bits, and when the priority field takes a value of 0, it indicates that the priority field does not carry a priority value.

In a possible implementation, the priority value of a relay device is determined based on health parameters of the relay device, wherein the health parameters comprise any one or more of the following:
the number of accessible multicast sources;
network quality with the multicast source(s);
failure ratio(s) of transmission path(s) with the multicast source(s);
routing link quality with the multicast source(s).

In a fourth aspect, an example of the present disclosure provides a machine-readable storage medium having stored therein machine-executable instructions that, when called and executed by a processor, cause the processor to implement any one of the method in the first aspect.

In a fifth aspect, an example of the present disclosure provides a computer program product, which causes a processor to implement any one of the method in the first aspect.

By adopting the above technical solution and the example of the present disclosure, the relay device communicating with the gateway device includes a primary relay device and a backup relay device, and the switching between the primary relay device and the backup relay device can performed under the condition that the relationship between the priority value of the primary relay device and the priority value of the backup relay device meets a preset switching condition. Because the priority value indicates the multicast service quality of the relay device, that is to say, the gateway device can perform primary-backup switching on the relay device based on the multicast service quality of the relay device, so that the multicast service quality of the gateway device for the multicast receiver can be avoided from being affected due to the degrading of the multicast service quality of one relay device, and the multicast service quality of the gateway device can be improved.

### Brief Description of the Drawings

The drawings described herein are provided to provide a further understanding of the present disclosure and constitute a part of the present disclosure. The illustrative examples of the present disclosure and their descriptions are used to explain the present disclosure and do not constitute undue limitations on the present disclosure.
Fig. 1 is a schematic diagram of an AMT network architecture provided by an example of the present disclosure;
Fig. 2 is a flowchart of a method for establishing an AMT tunnel between a gateway device and a relay device provided by an example of the present disclosure;
Fig. 3 is a flowchart of a method for primary-backup switching provided by an example of the present disclosure;
Fig. 4 is an exemplary schematic diagram of a Membership Query packet provided by an example of the present disclosure;
Fig. 5 is an exemplary schematic diagram of a Relay Advertisement packet provided by an example of the present disclosure;
Fig. 6 is a flowchart of another method for primary-backup switching provided by an example of the present disclosure;
Fig. 7 is a flowchart of another method for primary-backup switching provided by an example of the present disclosure;
Fig. 8 is a schematic diagram of the structure of an apparatus for primary-backup switching provided by an example of the present disclosure;
Fig. 9 is a schematic diagram of the structure of a gateway device provided by an example of the present disclosure.

### Detailed Description

In order to make the purpose, technical solution and advantages of the present disclosure more clear, the present disclosure will be further described in detail with reference to the attached drawings and examples. Obviously, the described examples are only a part of the examples of the present disclosure, rather than all examples. All other examples acquired by those skilled in the art based on the examples in the present disclosure belong to the scope of protection of the present disclosure.

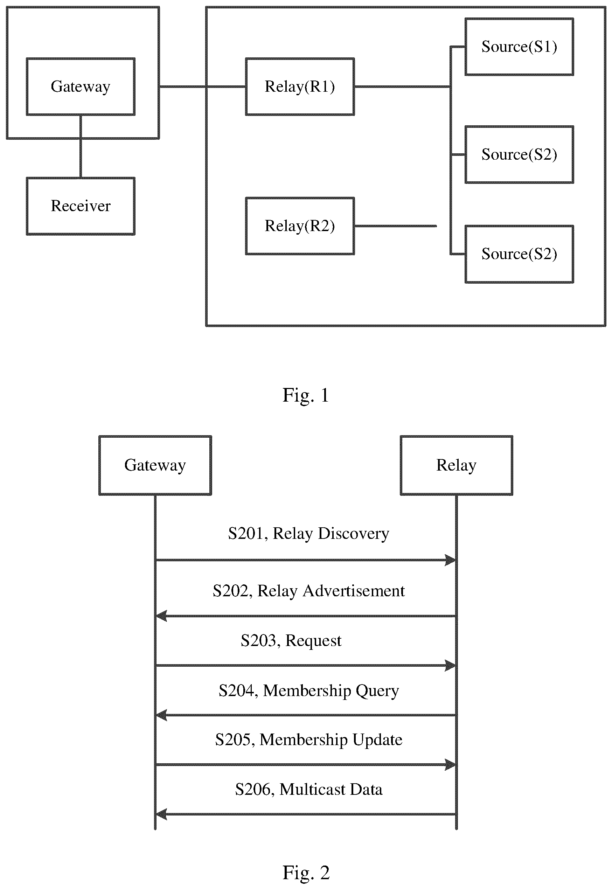

In order to understand the solution provided by the example of the present disclosure, firstly, the AMT network architecture involved in the example of the present disclosure is introduced. As shown in Fig. 1, the AMT network architecture includes a multicast receiver (Receiver), a gateway device (Gateway), a relay device (Relay) R1, a relay device (Relay) R2, a multicast source (Source) S1, a multicast source (Source) S2 and a multicast source (Source) S3.

The number of devices in Fig. 1 is only an example, and the number of devices in actual implementation is not limited.

The multicast receiver can be a receiver who does not support multicast routing protocols and needs to obtain multicast data, such as a site, a host or an application.

The gateway device is located in a network that does not support multicast routing protocols, and the multicast receiver can access the gateway device.

Each relay device can be connected to at least one multicast source. For example, the relay device R1 and the relay device R2 in Fig. 1 are both connected to the multicast source S1, the multicast source S2 and the multicast source S3.

The gateway device can establish an AMT tunnel with a relay device in a manner of anycast, and then receive the multicast data from the multicast source sent by the relay device through the AMT tunnel.

In Fig. 1, for example, an AMT tunnel is established between the gateway device and the relay device R1. After receiving the multicast data from any multicast source, the relay device R1 can forward the multicast data to the gateway device through the AMT tunnel, and then the gateway device can forward the multicast data to the multicast receiver.

The process of establishing an AMT tunnel between a gateway device and a relay device is introduced below.

As shown in Fig. 2, the process of establishing an AMT tunnel between a gateway device and a relay device includes the followings:
At S201, a gateway device sends a Relay Discovery packet (Relay Discovery) to a relay device.

The relay device supporting AMT protocols will advertise routes with the same IP address prefix, and after learning these routes, the gateway device can generate an anycast address based on the IP address prefix. As an example, the anycast address includes the IP address prefix, and all the remaining bits are set to 0.

When sending the Relay Discovery packet according to the anycast address, the gateway device will forward the Relay Discovery packet to a relay device with the nearest topological position and having been advertised the IP address prefix according to the anycast routing table.

In an example, the Relay Discovery packet includes a nonce.

At S202, after receiving the Relay Discovery packet, the relay device sends a Relay Advertisement packet (Relay Advertisement) to the gateway device.

After receiving the Relay Discovery packet, the relay device can obtain the nonce from the Relay Discovery packet. Moreover, the Relay Advertisement packet sent by the relay device includes the nonce and the unicast Internet Protocol (IP) address of the relay device.

After receiving the Relay Advertisement packet, the gateway device verifies whether the nonce in the Relay Advertisement packet is the same as the nonce sent by the gateway device itself. If the nonce in the Relay Advertisement packet is the same as the nonce sent by the gateway device, the gateway device can use the unicast IP address in the Relay Advertisement packet when communicating with the relay device through AMT protocols.

S201-S202 are the relay device discovery stage, and through the above operations, the gateway device can determine the relay device that can establish an AMT tunnel with the gateway device itself.

At S203, the gateway device sends a Request packet (Request) to the relay device. Accordingly, the relay device receives the Request packet.

The Request packet contains a request nonce and a query identifier, and the query identifier is used to indicate whether the relay device should return a packet containing a general query message of Internet Group Management Protocol version 3 (IGMPv3) or a general query message of Multicast Listener Discover version 2 (MLDv2) to the gateway device.

For example, the value of the query identifier can be 1 or 0. When the value of the query identifier is 1, it indicates that the relay device shall send a packet containing a general query message of the IGMPv3 or a general query message of the MLDv2 to the gateway device. When the value of the query identifier is 0, it indicates that the relay device does not need to send a packet containing a general query message of the IGMPv3 or a general query message of the MLDv2 to the gateway device.

At S204, the relay device sends a Membership Query packet (Membership Query) to the gateway device. Accordingly, the gateway device receives the Membership Query packet.

After receiving the Request packet, the relay device can extract the source IP address, source User Datagram Protocol (UDP) port, request nonce and private key from the Request packet, and then calculate the hash digest based on the extracted information to obtain the message authentication code.

Furthermore, the relay device can return a Membership Query packet to the gateway device, wherein the Membership Query packet includes the above-mentioned request nonce, message authentication code, and the general query message of the IGMPv3 or the general query message of the MLDv2.

At S205, the gateway device sends a Membership Update packet (Membership Update) to the relay device.

After receiving the Membership Query packet, the gateway device can verify whether the request nonce in the Membership Query packet is the same as the request nonce included in the Request packet sent by the gateway device itself.

If the request nonce in the Membership Query packet is the same as the request nonce included in the Request packet sent by the gateway device itself, the gateway device can start the periodic query keep-alive timer (Query Timer), and the gateway device is triggered to send new request information to the relay device whenever the periodic query keep-alive timer expires.

At the same time, the gateway device saves the request nonce and the message authentication code, and obtains the general query message of the IGMPv3 or the general query message of the MLDv2 in the Membership Query packet, and the general query message of the IGMPv3 is processed by an IGMP protocol module in the gateway device or the general query message of the MLDv2 is processed by an MLD protocol module.

When the gateway device receives a multicast joining request sent by the multicast receiver, the gateway device can send a Membership Update packet to the relay device.

The Membership Update packet includes: a request nonce, a message verification code, and an IGMPv3 report message or an MLDv2 report message.

It can be understood that under the condition that the gateway device periodically sends request information to the relay device based on the periodic query keep-alive timer, the nonce carried in the Membership Update packet sent by the gateway device each time is the request nonce in the Membership Query packet received by the gateway device last time, and the message verification code carried is the message verification code in the Membership Query packet received by the gateway device last time.

At S206, the relay device sends a multicast data packet (Multicast Data) to the gateway device.

After receiving the Membership Update packet, the relay device calculates the message verification code based on information such as the source IP address, source UDP port, request nonce and private key of the Membership Update packet. If the calculated message verification code is the same as the message verification code in the Membership Update packet, the relay device receives and processes the Membership Update packet, so that the AMT tunnel is successfully established between the gateway device and the relay device. If the calculated message verification code is different from the message verification code in the Membership Update packet, the relay device ignores the Membership Update packet.

After the AMT tunnel is established between the gateway device and the relay device, if the relay device receives the multicast data from the multicast source and determines that the gateway device belongs to a multicast group corresponding to the multicast source, that is, the gateway device is interested in the multicast data of the multicast source, the relay device can encapsulate the multicast data into a multicast data packet, and then send the multicast data packet to the gateway device based on the AMT tunnel.

After receiving the multicast data packet, the gateway device extracts the multicast data in the multicast data packet and sends the multicast data to the multicast receiver.

Referring to Fig. 1, it is assumed that the gateway device is closest to the relay device R1, and an AMT tunnel has been successfully established with the relay device R1. If the forwarding path between the relay device R1 and a multicast source fails or the transmission quality degrades, the multicast service quality will be affected.

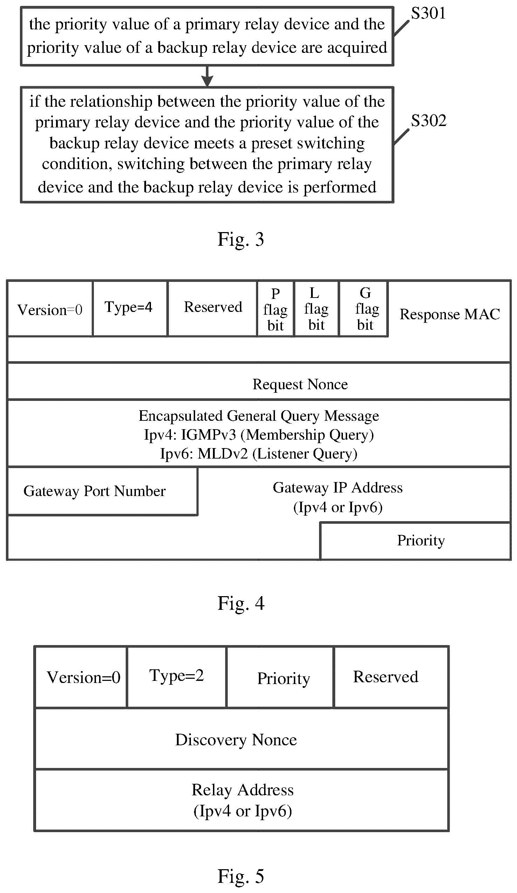

In order to solve the above problems, an example of the present disclosure provides a method for primary-backup switching, which is applied to a gateway device, as shown in Fig. 3, including the followings.

At S301, the priority value of a primary relay device and the priority value of a backup relay device are acquired.

Wherein, the priority value of a relay device is used for representing the multicast service quality of the relay device. The higher the multicast service quality of the relay device, the higher the priority value of relay device; the lower the multicast service quality of the relay device, the lower the priority value of the relay device.

An AMT tunnel has been established between the primary relay device and the gateway device, and no AMT tunnel has been established between the backup relay device and the gateway device. There is one primary relay device, and the number of backup relay devices can be one or more, which can be set according to the actual situations. The example of the present disclosure takes the number of backup relay devices being one as an example.

At S302, if the relationship between the priority value of the primary relay device and the priority value of the backup relay device meets a preset switching condition, switching between the primary relay device and the backup relay device is performed.

Switching between the primary relay device and the backup relay device means switching the current primary relay device to the backup relay device and switching the current backup relay device to the primary relay device.

It can be understood that in the process of primary-backup switching, the gateway device can disconnect the AMT tunnel with the primary relay device; after disconnecting the AMT tunnel with the primary relay device, the identity of the primary relay device is switched as a backup relay device. Accordingly, the gateway device also needs to establish an AMT tunnel with the backup relay device. After establishing the AMT tunnel with the backup relay device, the identity of the backup relay device is switched as a primary relay device, that is, the primary-backup switching is realized.

By adopting the example of the present disclosure, the relay device communicating with the gateway device includes a primary relay device and a backup relay device, and the switching between the primary relay device and the backup relay device can be performed under the condition that the relationship between the priority value of the primary relay device and the priority value of the backup relay device meets a preset switching condition. Because the priority value indicates the multicast service quality of the relay device, that is to say, the gateway device can perform primary-backup switching on the relay device based on the multicast service quality of the relay device, so that the multicast service quality of the gateway device to the multicast receiver can be avoided from being affected due to the degrading of the multicast service quality of one relay device, and the multicast service quality of the gateway device can be improved.

In the example of the present disclosure, in order to enable the gateway device to perform primary-backup switching according to the method flow shown in Fig. 2, the gateway device needs to firstly determine the primary relay device and the backup relay device, and after the gateway device is online, the primary relay device and the backup relay device can be determined in the following ways:
after the gateway device is online, sending Relay Discovery packets to a plurality of relay devices, wherein each of the Relay Discovery packets includes a different anycast address.

In an example, when the number of backup relay devices is one, two relay addresses can be configured for each relay device in advance, these two relay addresses having different IP address prefixes, and the forwarding paths between the gateway device and these two relay addresses are different. Furthermore, each relay device will advertise two routes with different IP address prefixes, and the gateway device can learn the routes advertised by the relay device.

Accordingly, the gateway device can create a pseudo interface for the primary relay device and the backup relay device, respectively, and configure these two pseudo interfaces to be mutually backup. A Relay Discovery Address Prefix and a Relay Discovery Address with the Relay Discovery Address Prefix are configured respectively for each pseudo interface.

For example, the Relay Discovery Address Prefix configured for pseudo interface 1 is one of the IP address prefixes advertised by the relay device, and the Relay Discovery Address Prefix configured for pseudo interface 2 is another IP address prefix advertised by the relay device.

Or, the gateway device can create one pseudo interface, for which two Relay Discovery Address Prefixes and two Relay Discovery Addresses are configured at the same time.

It can be understood that the relay discovery address is an anycast address. Assuming that the two relay discovery addresses configured by the gateway device are anycast address 1 and anycast address 2 advertisement timer respectively, the destination address of one Relay Discovery packet sent is anycast address 1, and the Relay Discovery packet can be routed to the relay device closest to the gateway device according to anycast address 1. Similarly, the destination address of another Relay Discovery packet sent by the gateway device is anycast address 2, and the Relay Discovery packet is routed to the relay device closest to the gateway device according to anycast address 2. Because the topological paths between the gateway device and anycast address 1 and between the gateway device and anycast address 2 are different, two Relay Discovery packets sent by the gateway device will be sent to two different relay devices.

After the gateway device sends these two Relay Discovery packets, if a Relay Advertisement packet sent by a relay device is received within a first preset duration, the relay device that sent the Relay Advertisement packet will be taken as the primary relay device.

Or, if Relay Advertisement packets sent by a plurality of relay devices are received within the first preset duration, a relay device is selected from the plurality of relay devices as the primary relay device, wherein the Relay Advertisement packet sent by the selected primary relay device carries the maximum priority value.

In other words, if Relay Advertisement packets sent by the plurality of relay devices are received within the first preset duration, and if one Relay Advertisement packet carries the largest priority value, the relay device corresponding to the Relay Advertisement packet with the largest priority value is taken as the primary relay device, and other relay devices are taken as the backup relay devices.

In an example, the gateway device can start an advertisement timer after sending the above two Relay Discovery packets, and the advertisement timer expires when the first preset duration is reached. In this way, whether the first preset duration is reached can be determined through the timer expiring mechanism.

If the gateway device does not receive the Relay Advertisement packet sent by any relay device within the first preset duration, it can resend the Relay Discovery packet according to the AMT protocols.

After determining the primary relay device, the gateway device can establish an AMT tunnel with the primary relay device. The method of establishing the AMT tunnel between the gateway device and the primary relay device complies with AMT protocols, and will not be described here.

By adopting the example of the present disclosure, the gateway device can send a plurality of Relay Discovery packets, each Relay Discovery packet including a different anycast address, and then the relay device that sent the Relay Advertisement packet is taken as the primary relay device when the Relay Advertisement packet is received within a first preset duration, thus ensuring that the gateway device can at least establish an AMT tunnel with one relay device. Or, under the condition that a plurality of Relay Advertisement packets are received within the first preset duration, the relay device corresponding to the Relay Advertisement packet with the largest priority value can be used as the primary relay device, so that the gateway device can provide multicast service with higher quality for the multicast receiver.

In an example of the present disclosure, after the gateway device establishes the AMT tunnel with the primary relay device, it can continue to obtain the priority values of the primary relay device and the backup relay device. The gateway device can obtain the priority value of the primary relay device through the following operations A- B, and the priority value of the backup relay device through the following operations C- D.

Step A, sending a Request packet to the primary relay device every other second preset duration.

In the process of establishing the AMT tunnel with the primary relay device, the gateway device will send a Request packet to the primary relay device. After receiving the Membership Query packet replied by the primary relay device and verifying that the request nonce carried in the Membership Query packet is correct, the gateway device can start a periodic query keep-alive timer (Query Timer), and the periodic query keep-alive timer expires when the second preset duration is reached.

Furthermore, whenever the query keep-alive timer expires, the gateway device sends a new Request packet to the primary relay device.

The Request packet is a Request packet in AMT protocols, and the Membership Query packet is a Membership Query packet in AMT protocols.

Step B, receiving a Membership Query packet sent by the primary relay device, wherein the Membership Query packet includes the priority value of the primary relay device.

Every time after receiving the Request packet, the primary relay device can obtain its latest priority value and encapsulate it in the Membership Query packet.

It can be understood that the gateway device can receive the Membership Query packet replied by the primary relay device every time it sends a Request packet to the primary relay device, so that the gateway device can periodically obtain the priority value of the primary relay device.

According to AMT protocols, after receiving the Membership Query packet, the gateway device will further send the Membership Update packet to the primary relay device.

Step C, sending a Relay Discovery packet to the backup relay device every other first preset duration.

Every time the gateway device sends a Relay Discovery packet, the gateway device can start the advertisement timer, and whenever the advertisement timer expires, it sends a Relay Discovery packet to the backup relay device, which is a Relay Discovery packet in AMT protocols.

For example, after the gateway device is online, it can start the advertisement timer after sending Relay Discovery packets to a plurality of relay devices respectively.

As an example, if the gateway device is online, the destination addresses of the two Relay Discovery packets sent are anycast address 1 and anycast address 2 respectively. If the Relay Discovery packet with the destination address of anycast address 1 is sent to the relay device 1, and the gateway device determines that the relay device 1 is the primary relay device, and subsequently, the gateway device can send the Relay Discovery packet with the destination address of anycast address 2 every time the advertisement timer expires.

Step D, receiving a Relay Advertisement packet sent by the backup relay device, wherein the Relay Advertisement packet includes the priority value of the backup relay device.

After receiving the Relay Discovery packet, the backup relay device can obtain its latest priority value and encapsulate it in a Relay Advertisement packet, which is a Relay Advertisement packet in AMT protocols.

It can be understood that the gateway device can receive a Relay Advertisement packet replied by the backup relay device every time after sending the Relay Discovery packet to the backup relay device, so that the gateway device can periodically obtain the priority value of the backup relay device.

By adopting the example of the present disclosure, the gateway device can periodically obtain the priority values of the primary relay device and the backup relay device, so that the gateway device can perform primary-backup switching between the primary relay device and the backup relay device in time according to the priority values of the primary relay device and the backup relay device, and the multicast service quality can be improved.

In the example of the present disclosure, the priority value of a relay device can be determined based on the health parameters of the relay device, including but not limited to the following parameters of:
the number of accessible multicast sources;
network quality with the multicast source(s);
failure ratio(s) of transmission path(s) with the multicast source(s);
routing link quality with the multicast source(s).

The network quality can be transmission delay, jitter, packet loss rate and so on between a relay device and a multicast source.

The relay device can detect the failure ratio of the transmission path with a multicast source through a detection mechanism, for example, the detection mechanism can be a point 2 multiple point bidirectional forwarding detection (P2MP BFD) mechanism.

Each health parameter of the relay device corresponds to a preset weight value and threshold value, and the priority value of relay device is the sum of the weight values of the health parameters. Each time after a health parameter is acquired, if the health parameter is less than the threshold value corresponding to the health parameter, the priority value is reduced by the weight value corresponding to the health parameter. The priority parameter is increased by the weight value corresponding to the health parameter, until the health parameter is greater than or equal to the threshold value corresponding to the health parameter again.

The relay device can refresh its own priority value regularly.

In one example, the relay device can calculate its own priority value based on its own health parameters.

In another example, a network controller can centrally monitor the health parameters of each relay device, calculate the priority value for each relay device, and then issue the priority value to each relay device.

In one possible implementation, S302, if the relationship between the priority value of the primary relay device and the priority value of the backup relay device meets a preset switching condition, switching between the primary relay device and the backup relay device, specifically includes the following three implementations:
Implementation one: if the priority value of the backup relay device is greater than the priority value of the primary relay device, switching between the primary relay device and the backup relay device.

That is, the preset switching condition can be that: the priority value of the backup relay device is greater than the priority value of the primary relay device.

If the priority value of the backup relay device is greater than the priority value of the primary relay device, it means that the multicast service quality of the backup relay device is higher, so the switching between the primary and backup relay devices can be performed, so that the multicast tunnel can be switched to the AMT tunnel with the backup relay device, and the gateway device can provide better multicast service for the multicast receiver.

Implementation two: if the priority value of the backup relay device is greater than the priority value of the primary relay device, starting a primary-backup switching timer, and if the last acquired priority value of the backup relay device is greater than the last acquired priority value of the primary relay device before the primary-backup switching timer expires, switching between the primary relay device and the backup relay device.

That is, the preset switching condition can be that: after detecting that the priority value of the backup relay device is greater than the priority value of the primary relay device, a primary-backup switching timer is started, and the last acquired priority value of the backup relay device is greater than the last acquired priority value of the primary relay device before the primary-backup switching timer expires.

It can be understood that if the priority value of the backup relay device acquired by the gateway device for the last time is less than or equal to the priority value of the primary relay device acquired by the gateway device for the last time before the primary-backup switching timer expires, the gateway device does not need to perform the switching between the primary and backup relay devices, and still maintains the AMT tunnel with the primary relay device. In this way, frequent switching between primary and backup relay devices caused by network instability and other factors can be avoided.

Implementation three: if the priority value of the backup relay device is greater than the priority value of the primary relay device, starting the primary-backup switching timer; if the acquired priority value of the backup relay device is always greater than the acquired priority values of the primary relay device before the primary-backup switching timer expires, switching between the primary relay device and the backup relay device.

That is, the preset switching condition is that: if the priority value of the backup relay device is greater than the priority value of the primary relay device, a primary-backup switching timer is started, and the acquired priority value of the backup relay device is always greater than the acquired priority value of the primary relay device before the primary-backup switching timer expires.

On the other hand, if the priority value of the backup relay device acquired at any time is less than or equal to the acquired priority value of the primary relay device before the primary-backup switching timer expires, it is unnecessary to perform the switching between the primary and backup relay devices and still maintains the AMT tunnel with the primary relay device.

In this way, if the priority value of the backup relay device keeps greater than the priority value of the primary relay device within a duration of time, the switching between the primary and backup relay devices will be performed, otherwise, the switching will not be performed, thus avoiding frequent switching between the primary and backup relay devices caused by factors such as network instability.

In an example of the present disclosure, after the gateway device determines that the priority values of the primary relay device and the backup relay device meet the preset switching condition, performing the switching between the primary and backup relay devices specifically includes:
sending by the gateway device a Request packet to the backup relay device, and sending by the gateway device a Membership Update packet to the backup relay device if receiving a Membership Query packet sent by the backup relay device. After sending the Membership Update packet to the backup relay device, the AMT tunnel between the gateway device and the backup relay device is established.

In addition, if the Membership Query packet sent by the backup relay device is received, the gateway device needs to stop the periodic query keep-alive timer (Query timer) with the primary relay device. If no Membership Query packet sent by the primary relay device is received within a third preset duration, the information about the AMT tunnel with the primary relay device is deleted. The periodic query keep-alive timer expires when a second preset duration is reached. The information about the AMT tunnel may include the identifier of the AMT tunnel and other information used to describe the AMT tunnel. For details, please refer to the relevant provisions of AMT protocols. The third preset duration can also be realized by a timer, and the setting of the third preset duration can comply with the provisions of IGMP protocols or MLD protocols.

Wherein, after the gateway device stops the periodic query keep-alive timer for the primary relay device, it will stop sending a Membership Query packet to the primary relay device every other second preset duration, and correspondingly, the primary relay device will not reply to the Membership Query packet.

After the gateway device sends a Request packet to the backup relay device, if it can receive the Membership Query packet sent by the backup relay device, it means that the gateway device can communicate with the backup relay device, that is, an AMT tunnel can be established with the backup relay device. Therefore, the gateway device can delete the information about the AMT tunnel with the primary relay device in the above way. It can be understood that after the gateway device deletes the information about the AMT tunnel with the primary device, it is equivalent to disconnecting the AMT tunnel with the primary device, and then the primary relay device will not send multicast data to the gateway device through the AMT tunnel.

After deleting the information about the AMT tunnel with the primary relay device, the gateway device can also perform the following operation of:
sending a Relay Discovery packet to the primary relay device every other first preset duration.

After the gateway device deletes the information about the AMT tunnel with the primary relay device, the primary relay device has changed to a backup role, so the gateway device needs to start an advertisement timer for the primary relay device, that is, start sending a Relay Discovery packet to the primary relay device every other first preset duration, and correspondingly, the primary relay device will reply with the Relay Advertisement packet carrying a priority value.

In addition, after the gateway device receives the Membership Query packet sent by the backup relay device, the gateway device can send a Relay Advertisement packet to the backup relay device every other second preset duration.

Since the gateway device has established an AMT tunnel with the backup relay device, at this time, the backup relay device has changed to a primary role, so the gateway device can close the advertisement timer maintained for the backup relay device, that is, stop sending the Relay Discovery packet to the backup relay device every other first preset duration.

And the gateway device can start a periodic query keep-alive timer for the backup relay device, that is, start sending a Request packet to the backup relay device every other second preset duration, and correspondingly, the backup relay device will also reply with a Membership Query packet carrying a priority value.

In this way, the switching between the primary and backup relay devices is completed, and the primary and backup roles of the primary and backup relay devices are exchanged. Subsequently, the priority values of the primary and backup relay devices can be acquired periodically according to the method in the above example, and when the preset switching condition is met, switching between the primary and backup relay devices is performed again.

Based on the introduction of the above examples, the example of the present disclosure adds priority values to both the Membership Query packet and the Relay Advertisement packet, and the packet formats of the Membership Query packet and the Relay Advertisement packet are introduced below.

In an example of the present disclosure, the Membership Query packet comprises a first flag bit field and a priority field, and when the first flag bit field takes a first value, it indicates that the priority field carries the priority value of the primary relay device.

In addition, the Membership Query packet further includes a second flag bit field.

If the second flag bit field takes the first value, it indicates that the priority field is located behind and adjacent to a gateway address field;
If the second flag bit field takes a second value, it indicates that the priority field is located behind and adjacent to the encapsulation information of an ordinary query message.

For example, the first value may be 1 and the second value may be 0.

As an example, as shown in Fig. 4, Fig. 4 is a structural schematic diagram of a Membership Query packet when the second flag bit field takes the first value.

The Membership Query packet includes the following fields: Version, Type, Reserved bit (Reserved), P flag bit, L flag bit, G flag bit, Response Media Access Control (Response MAC) address, Request Nonce, Encapsulation information of a General Query Message (Encapsulated General Query Message), Gateway Port Number, Gateway IP Address and Priority.

The value of the Type field (Type) is 4. If a gateway device communicates with a relay device based on Ipv4 protocols, the general query message is a Membership Query based on IGMPv3 protocols; If the communication between the gateway device and the relay device is based on Ipv6 protocols, the general query message is a Listener Query based on MLDv2 protocols. The IP address of the gateway device is Ipv4 address or Ipv6 address.

The first flag bit field is a P flag bit field, and the second flag bit field is a G flag bit field. When the P flag bit field and the G flag bit field are 1 at the same time, it means that the priority field is located after the Gateway IP Address field in Fig. 4.

When the value of the P flag bit field is 1 and the value of the G flag bit field is 0, it means that the Gateway Port Number field and the Gateway IP Address field are not included in the Membership Query packet, and the priority field is located after the Encapsulated General Query Message in Fig. 4.

In another example of the present disclosure, the Relay Advertisement packet includes a priority field, which is used to carry the priority value of the backup relay device.

As an example, as shown in Fig. 5, Fig. 5 is a schematic diagram of a Relay Advertisement packet provided by an example of the present disclosure. The Relay Advertisement packet includes the following fields: Version, Type, Priority, Reserved bit (Reserved), Discovery Nonce and Relay Address. The value of the Version field is 0, the value of the Type field is 2, and the Relay Address field includes an Ipv4 address or an Ipv6 address. The priority field is located after and adjacent to the Type field.

In the above Membership Query packet and relay query packet, the priority field is an 8-bit unsigned integer with an effective range of 1-255. When the value of the priority field is 0, it means that the priority field does not carry the priority value of the primary relay device.

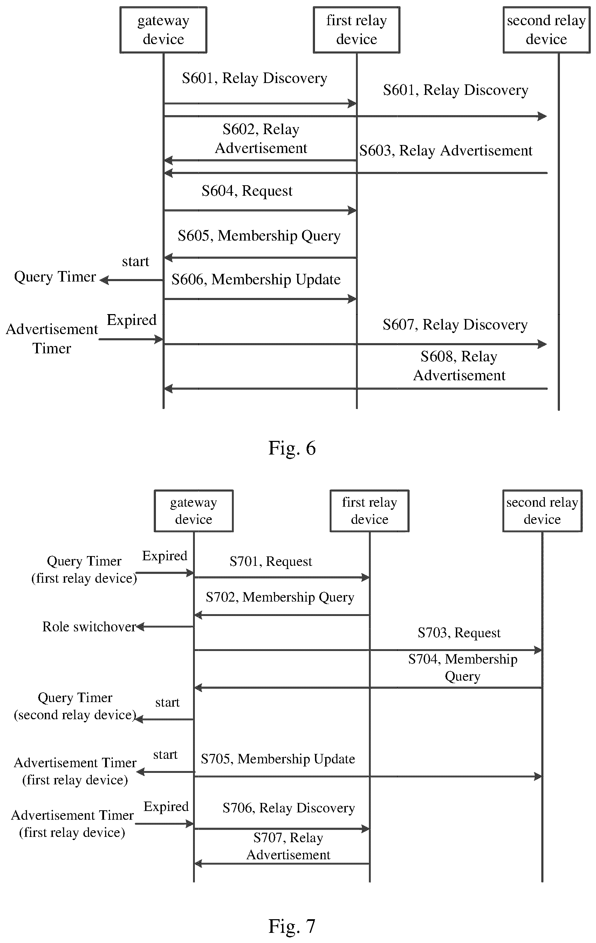

As shown in Fig. 6, Fig. 6 is a flow diagram of a method for primary-backup switching provided by the example of the present disclosure, which may include S601-S608.

At S601, a gateway device sends a Relay Discovery packet (Relay Discovery) to a first relay device and a second relay device.

At S602, after receiving the Relay Discovery packet, the first relay device sends a Relay Advertisement packet (Relay Advertisement) to the gateway device.

Wherein, the Relay Advertisement packet includes the first priority value of the first relay device.

At S603, after receiving the Relay Discovery packet, the second relay device sends a Relay Advertisement packet to the gateway device.

Wherein, the Relay Advertisement packet includes the second priority value of the second relay device.

After receiving the Relay Advertisement packets sent by the first relay device and the second relay device, the gateway device determines the relationship between the first priority value and the second priority value. If the first priority value is greater than the second priority value, the gateway device determines the first relay device as a primary relay device and the second relay device as a backup relay device.

At S604, the gateway device sends a Request packet (Request) to the first relay device.

For example, the priority value of the first relay device is greater than the priority value of the second relay device. The gateway device takes the first relay device as the primary relay device and the second relay device as the backup relay device. Based on AMT protocols, the gateway device will send a Request packet to the first relay device.

At S605, after receiving the Request packet, the first relay device sends a Membership Query packet (Membership Query) to the gateway device.

Wherein, the Membership Query packet includes the latest first priority value of the first relay device.

After receiving the Membership Query packet, the gateway device can start a periodic query keep-alive timer (Query Timer), and whenever the periodic query keep-alive timer expires, the gateway device will be triggered to resend a Request packet to the first relay device.

At S606, the gateway device sends a Membership Update packet (Membership Update) to the first relay device.

After the first relay device receives and processes the Membership Update packet, the establishment of an AMT tunnel is completed between the gateway device and the first relay device.

It can be understood that the priority value of a relay device changes. After determining that the first relay device is the primary relay device and the second relay device is the backup relay device, an advertisement timer can be started. Specifically, the advertisement timer can be started after the gateway device receives the Membership Query packet sent by the first relay device, and whenever the advertisement timer expires, the following operations are triggered:
At S607, the gateway device sends a Relay Discovery packet (Relay Discovery) to the second relay device.
At S608, the second relay device sends a Relay Advertisement packet (Relay Advertisement) to the gateway device.

Similarly, the Relay Advertisement packet carries the latest second priority value of the second relay device, so that the gateway device can obtain the second priority value of the second relay device in time.

The specific implementation of the above operations has been described in detail above, and will not be repeated here.

As shown in Fig. 7, Fig. 7 is a flow diagram of another method for primary-backup switching provided by an example of the present disclosure, which may include S701-S707.

At S701, when the periodic query keep-alive timer expires, the gateway device sends a Request packet (Request) to the first relay device.

Wherein, the first relay device is currently a primary relay device.

At S702, the first relay device sends a Membership Query packet (Membership Query) to the gateway device.

The gateway device receives the Membership Query packet and obtains the priority value of the first relay device. If the priority value of the first relay device is less than the priority value of the second relay device at this time, the primary and backup roles are exchanged.

At S703, the gateway device sends a Request packet (Request) to the second relay device.

At S704, the second relay device sends a Membership Query packet (Membership Query) to the gateway device.

Wherein, the Membership Query packet carries the priority value of the second relay device.

After the gateway device receives the Membership Query packet, it indicates that the second relay device can be used as the primary relay device, then the gateway device stops the periodic query keep-alive timer for the first relay device, starts the periodic query keep-alive timer for the second relay device, and sends a new Request packet to the second relay device whenever the periodic query keep-alive timer for the second relay device expires.

At S705, the gateway device sends a Membership Update packet (Membership Update) to the second relay device.

After the second relay device receives and processes the Membership Update packet, the establishing of the AMT tunnel is completed between the gateway device and the second relay device.

At this time, the second relay device is switched as the primary relay device, and the first relay device is switched as the backup relay device.

It can be understood that after receiving the Membership Query packet in S704, the gateway device can stop the periodic query keep-alive timer for the first relay device, so that the gateway device will not continue to send a Request packet to the first relay device, and the first relay device will not reply to the Membership Query packet to the gateway device.

If the gateway device does not receive a Membership Query packet within the third preset duration, it can start the advertisement timer for the first relay device, and whenever the advertisement timer for the first relay device expires, it can perform the following operations of:
At S706, the gateway device sends a Relay Discovery packet (Relay Discovery) to the first relay device.
S707, the first relay device sends a Relay Advertisement packet (Relay Advertisement) to the gateway device.

Similarly, the Relay Advertisement packet carries the priority value of the second relay device, so that the gateway device can obtain the priority value of the second relay device in time.

The specific implementation of the above operations has been described in detail above, and will not be repeated here.

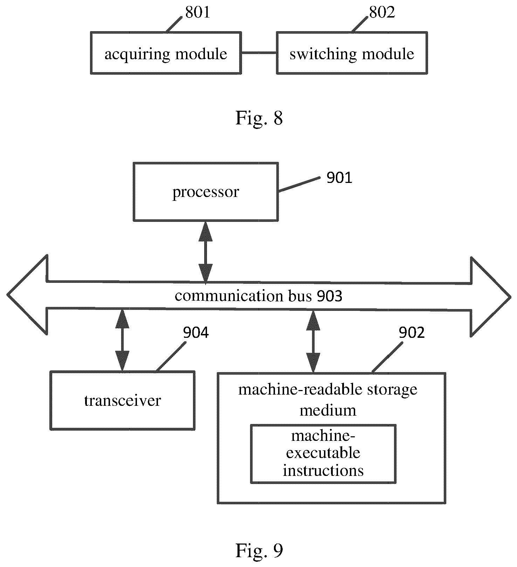

Based on the same inventive concept, an example of the present disclosure further provides an apparatus for primary-backup switching, which is applied to a gateway device, as shown in Fig. 8, and includes:
an acquiring module 801, to acquire a priority value of a primary relay device and a priority value of a backup relay device, wherein the priority value of a relay device is used for representing multicast service quality of the relay device;
a switching module 802 to, if a relationship between the priority value of the primary relay device and the priority value of the backup relay device meets a preset switching condition, switch between the primary relay device and the backup relay device.

In an example, the apparatus further includes:
a sending module to send, after the gateway device is online, Relay Discovery packets to a plurality of relay devices respectively, wherein each of the Relay Discovery packets comprises a different anycast address;
a selecting module to, if a Relay Advertisement packet sent by a relay device is received within a first preset duration, take the relay device that sent the Relay Advertisement packet as the primary relay device; or, if a plurality of Relay Advertisement packets sent by a plurality of relay devices are received within the first preset duration, select a relay device from the plurality of relay devices as the primary relay device, wherein the Relay Advertisement packet sent by the primary relay device carries a maximum priority value;
an establishing module, to establish an AMT tunnel with the primary relay device.

In an example, the acquiring module 801 is specifically to:
send a Request packet to the primary relay device every other second preset duration;
receive a Membership Query packet sent by the primary relay device, wherein the Membership Query packet comprises the priority value of the primary relay device;
send a Relay Discovery packet to the backup relay device every other first preset duration;
receive a Relay Advertisement packet sent by the backup relay device, wherein the Relay Advertisement packet comprises the priority value of the backup relay device.

In an example, the switching module 802 is specifically to:
if the priority value of the backup relay device is greater than the priority value of the primary relay device, switch between the primary relay device and the backup relay device; or,
if the priority value of the backup relay device is greater than the priority value of the primary relay device, start a primary-backup switching timer, and if a last acquired priority value of the backup relay device is greater than a last acquired priority value of the primary relay device before the primary-backup switching timer expires, switch between the primary relay device and the backup relay device; or,
if the priority value of the backup relay device is greater than the priority value of the primary relay device, start the primary-backup switching timer; if the acquired priority value of the backup relay device is always greater than the acquired priority value of the primary relay device before the primary-backup switching timer expires, switch between the primary relay device and the backup relay device.

In an example, the switching module 802 is specifically to:
send a Request packet to the backup relay device;
if the Membership Query packet sent by the backup relay device is received, send a Membership Update packet to the backup relay device, and stop a periodic query keep-alive timer for the primary relay device, wherein the periodic query keep-alive timer expires when the second preset duration is reached;
if no Membership Query packet sent by the primary relay device is received within a third preset duration, delete information about an AMT tunnel with the primary relay device.

In an example, the switching module 802 is further to send a Relay Discovery packet to the primary relay device every other first preset duration; the switching module 802 is further to send a Request packet to the backup relay device every other second preset duration.

In an example, the Membership Query packet comprises a first flag bit field and a priority field, and when the first flag bit field takes a first value, it indicates that the priority field carries the priority value of the primary relay device.

In an example, the Membership Query packet further comprises a second flag bit field;
if the second flag bit field takes the first value, it indicates that the priority field is located behind and adjacent to a gateway address field;
if the second flag bit field takes a second value, it indicates that the priority field is located behind and adjacent to encapsulation information of an ordinary query message.

In an example, the Relay Advertisement packet comprises a priority field, which is used to carry the priority value of the backup relay device.

In an example, the priority field occupies 8 reserved bits, and when the priority field takes a value of 0, it indicates that the priority field does not carry a priority value.

In an example, the priority value of a relay device is determined based on health parameters of the relay device, wherein the health parameters comprise any one or more of the following: the number of accessible multicast sources; network quality with the multicast source(s); failure ratio(s) of transmission path(s) with the multicast source(s); routing link quality with the multicast source(s).

An example of the present disclosure further provides a gateway device, as shown in Fig. 9, which includes:
a processor 901;
a transceiver 904;
a machine-readable storage medium 902 having stored therein machine-executable instructions that can be executed by the processor 901 to cause the processor 901 to perform the following operations of:
   acquiring, by the transceiver 904, a priority value of a primary relay device and a priority value of a backup relay device, wherein the priority value of a relay device is used for representing multicast service quality of the relay device;
   if a relationship between the priority value of the primary relay device and the priority value of the backup relay device meets a preset switching condition, switching between the primary relay device and the backup relay device.

In an example, the machine-executable instructions further cause the processor 901 to perform the following operations of:
after the gateway device is online, sending Relay Discovery packets to a plurality of relay devices respectively through the transceiver 904, wherein each of the Relay Discovery packets comprises a different anycast address;
if a Relay Advertisement packet sent by a relay device is received within a first preset duration through the transceiver 904, taking the relay device that sent the Relay Advertisement packet as the primary relay device; or, if a plurality of Relay Advertisement packets sent by a plurality of relay devices are received within the first preset duration through the transceiver 904, selecting a relay device from the plurality of relay devices as the primary relay device, wherein the Relay Advertisement packet sent by the primary relay device carries a maximum priority value;
establishing an AMT tunnel with the primary relay device.

In an example, the machine-executable instructions further cause the processor 901 to perform the following operations of:
sending a Request packet to the primary relay device through the transceiver 904 every other second preset duration ;
receiving a Membership Query packet sent by the primary relay device through the transceiver 904, wherein the Membership Query packet comprises the priority value of the primary relay device;
sending a Relay Discovery packet to the backup relay device through the transceiver 904 every other first preset duration;
receiving a Relay Advertisement packet sent by the backup relay device through the transceiver 904, wherein the Relay Advertisement packet comprises the priority value of the backup relay device.

In an example, the machine-executable instructions further cause the processor 901 to perform the following operations of:
if the priority value of the backup relay device is greater than the priority value of the primary relay device, switching between the primary relay device and the backup relay device; or,
if the priority value of the backup relay device is greater than the priority value of the primary relay device, starting a primary-backup switching timer, and if a last acquired priority value of the backup relay device is greater than a last acquired priority value of the primary relay device before the primary-backup switching timer expires, switching between the primary relay device and the backup relay device; or,
if the priority value of the backup relay device is greater than the priority value of the primary relay device, starting the primary-backup switching timer; if the acquired priority value of the backup relay device is always greater than the acquired priority value of the primary relay device before the primary-backup switching timer expires, switching between the primary relay device and the backup relay device.

In an example, the machine-executable instructions further cause the processor 901 to perform the following operations of:
sending a Request packet to the backup relay device through the transceiver 904;
if the Membership Query packet sent by the backup relay device is received through the transceiver 904, sending a Membership Update packet to the backup relay device through the transceiver 904, and stopping a periodic query keep-alive timer for the primary relay device, wherein the periodic query keep-alive timer expires when the second preset duration is reached;
if no Membership Query packet sent by the primary relay device is received through the transceiver 904 within a third preset duration, deleting information about an AMT tunnel with the primary relay device.

In an example, the machine-executable instructions further cause the processor 901 to perform the following operations of:
sending a Relay Discovery packet to the primary relay device through the transceiver 904 every other first preset duration.

The machine-executable instructions further cause the processor 901 to perform the following operation of:
sending a Request packet to the backup relay device through the transceiver 904 every other second preset duration;
In an example, the Membership Query packet comprises a first flag bit field and a priority field, and when the first flag bit field takes a first value, it indicates that the priority field carries the priority value of the primary relay device.

In an example, the Membership Query packet further comprises a second flag bit field;
if the second flag bit field takes the first value, it indicates that the priority field is located behind and adjacent to a gateway address field;
if the second flag bit field takes a second value, it indicates that the priority field is located behind and adjacent to encapsulation information of an ordinary query message.

In an example, the Relay Advertisement packet comprises a priority field, which is used to carry the priority value of the backup relay device.

In an example, the priority field occupies 8 reserved bits, and when the priority field takes a value of 0, it indicates that the priority field does not carry a priority value.

In an example, the priority value of a relay device is determined based on health parameters of the relay device, wherein the health parameters comprise any one or more of the following: the number of accessible multicast sources; network quality with the multicast source(s); failure ratio(s) of transmission path(s) with the multicast source(s); routing link quality with the multicast source(s).

As shown in Fig. 9, the gateway device may further include a communication bus 903. The processor 901, the machine-readable storage medium 902 and the transceiver 904 communicate with each other through the communication bus 903, which can be a peripheral component interconnect (PCI) bus or an extended industry standard architecture (EISA) bus and the like. The communication bus 903 can be divided into an address bus, a data bus, a control bus and the like.

The transceiver 904 can be a wireless communication module. Under the control of the processor 901, the transceiver 904 performs data interaction with another device.

The machine-readable storage medium 902 may include a Random Access Memory (RAM) or a Non-Volatile Memory (NVM), such as at least one disk memory. In addition, the machine-readable storage medium 902 can also be at least one storage apparatus located away from the aforementioned processor.

The processor 901 may be a general-purpose processor, including a Central Processing Unit (CPU) and a Network Processor (NP). It can also be a Digital Signal Processing (DSP), an application specific integrated circuit (ASIC), a Field-Programmable Gate Array (FPGA) or other programmable logic apparatuses, discrete gate or transistor logic apparatuses, and discrete hardware components.

Based on the same inventive concept, according to the method for primary-backup switching provided by the example of the present disclosure, an example of the present disclosure also provides a machine-readable storage medium, which has stored therein machine-executable instructions that can be executed by a processor. The processor is caused by the machine-executable instructions to realize any of the methods for primary-backup switching.

In yet another example provided by the present disclosure, there is also provided a computer program product containing instructions which, when running on a computer, causes the computer to execute any of the methods for primary-backup switching in the above examples.

It should be noted that in this disclosure, relational terms such as first and second are only used to distinguish one entity or operation from another entity or operation, and do not necessarily require or imply that there is any such actual relationship or order between these entities or operations. Moreover, the terms "including", "comprising" or any other variation thereof are intended to cover non-exclusive inclusion, so that a process, method, article or device including a series of elements includes not only those elements, but also other elements not explicitly listed or elements inherent to such process, method, article or device. Without further limitations, an element defined by the phrase "including a/an" does not exclude the existence of other identical elements in the process, method, article or device including the element.

The above is only the preferred example of the present disclosure, and it is not used to limit the present disclosure. Any modification, equivalent substitution, improvement, etc. made within the spirit and principle of the present disclosure should be included in the scope of protection of the present disclosure.

## Claims

1. A method for primary-backup switching, which is applied to a gateway device, comprising:
acquiring a priority value of a primary relay device and a priority value of a backup relay device, wherein the priority value of a relay device is used for representing multicast service quality of the relay device;
if a relationship between the priority value of the primary relay device and the priority value of the backup relay device meets a preset switching condition, switching between the primary relay device and the backup relay device.

2. The method according to claim 1, wherein the method further comprises:
after the gateway device is online, sending Relay Discovery packets to a plurality of relay devices respectively, wherein each of the Relay Discovery packets comprises a different anycast address;
if a Relay Advertisement packet sent by a relay device is received within a first preset duration, taking the relay device that sent the Relay Advertisement packet as the primary relay device; or, if a plurality of Relay Advertisement packets sent by a plurality of relay devices are received within the first preset duration, selecting a relay device from the plurality of relay devices as the primary relay device, wherein the Relay Advertisement packet sent by the primary relay device carries a maximum priority value;
establishing an AMT tunnel with the primary relay device.

3. The method according to claim 1, wherein acquiring the priority value of the primary relay device and the priority value of the backup relay device comprises:
sending a Request packet to the primary relay device every other second preset duration;
receiving a Membership Query packet sent by the primary relay device, wherein the Membership Query packet comprises the priority value of the primary relay device;
sending a Relay Discovery packet to the backup relay device every other first preset duration;
receiving a Relay Advertisement packet sent by the backup relay device, wherein the Relay Advertisement packet comprises the priority value of the backup relay device.

4. The method according to claim 3, wherein switching between the primary relay device and the backup relay device if the relationship between the priority value of the primary relay device and the priority value of the backup relay device meets the preset switching condition, comprises:
if the priority value of the backup relay device is greater than the priority value of the primary relay device, switching between the primary relay device and the backup relay device; or,
if the priority value of the backup relay device is greater than the priority value of the primary relay device, starting a primary-backup switching timer, and if a last acquired priority value of the backup relay device is greater than a last acquired priority value of the primary relay device before the primary-backup switching timer expires, switching between the primary relay device and the backup relay device; or,
if the priority value of the backup relay device is greater than the priority value of the primary relay device, starting the primary-backup switching timer; if the acquired priority value of the backup relay device is always greater than the acquired priority value of the primary relay device before the primary-backup switching timer expires, switching between the primary relay device and the backup relay device.

5. The method according to claim 3, wherein switching between the primary relay device and the backup relay device comprises:
sending a Request packet to the backup relay device;
if the Membership Query packet sent by the backup relay device is received, sending a Membership Update packet to the backup relay device, and stopping a periodic query keep-alive timer for the primary relay device, wherein the periodic query keep-alive timer expires when the second preset duration is reached;
if no Membership Query packet sent by the primary relay device is received within a third preset duration, deleting information about an AMT tunnel with the primary relay device.

6. The method according to claim 5, wherein after deleting the information about the AMT tunnel with the primary relay device, the method further comprises:
sending a Relay Discovery packet to the primary relay device every other first preset duration;
after the Membership Query packet sent by the backup relay device is received, the method further comprises:
sending a Request packet to the backup relay device every other second preset duration.

7. The method according to claim 3, wherein the Membership Query packet comprises a first flag bit field and a priority field, and when the first flag bit field takes a first value, it indicates that the priority field carries the priority value of the primary relay device.

8. The method according to claim 7, wherein the Membership Query packet further comprises a second flag bit field;
if the second flag bit field takes the first value, it indicates that the priority field is located behind and adjacent to a gateway address field;
if the second flag bit field takes a second value, it indicates that the priority field is located behind and adjacent to encapsulation information of an ordinary query message.

9. The method according to claim 3, wherein the Relay Advertisement packet comprises a priority field, which is used to carry the priority value of the backup relay device.

10. The method according to claim 7 or 9, wherein the priority field occupies 8 reserved bits, and when the priority field takes a value of 0, it indicates that the priority field does not carry a priority value.

11. The method according to claim 1, wherein the priority value of a relay device is determined based on health parameters of the relay device, wherein the health parameters comprise any one or more of the following:
the number of accessible multicast sources;
network quality with the multicast source(s);
failure ratio(s) of transmission path(s) with the multicast source(s);
routing link quality with the multicast source(s).

12. An apparatus for primary-backup switching, which is applied to a gateway device, comprising:
an acquiring module, to acquire a priority value of a primary relay device and a priority value of a backup relay device, wherein the priority value of a relay device is used for representing multicast service quality of the relay device;
a switching module to, if a relationship between the priority value of the primary relay device and the priority value of the backup relay device meets a preset switching condition, switch between the primary relay device and the backup relay device.

13. The apparatus according to claim 12, wherein the apparatus further comprises:
a sending module to send, after the gateway device is online, Relay Discovery packets to a plurality of relay devices respectively, wherein each of the Relay Discovery packets comprises a different anycast address;
a selecting module to, if a Relay Advertisement packet sent by a relay device is received within a first preset duration, take the relay device that sent the Relay Advertisement packet as the primary relay device; or, if a plurality of Relay Advertisement packets sent by a plurality of relay devices are received within the first preset duration, select a relay device from the plurality of relay devices as the primary relay device, wherein the Relay Advertisement packet sent by the primary relay device carries a maximum priority value;
an establishing module, to establish an AMT tunnel with the primary relay device.

14. The apparatus according to claim 12, wherein the acquiring module is specifically to:
send a Request packet to the primary relay device every other second preset duration;
receive a Membership Query packet sent by the primary relay device, wherein the Membership Query packet comprises the priority value of the primary relay device;
send a Relay Discovery packet to the backup relay device every other first preset duration;
receive a Relay Advertisement packet sent by the backup relay device, wherein the Relay Advertisement packet comprises the priority value of the backup relay device.

15. The apparatus according to claim 14, wherein the switching module is specifically to:
if the priority value of the backup relay device is greater than the priority value of the primary relay device, switch between the primary relay device and the backup relay device; or,
if the priority value of the backup relay device is greater than the priority value of the primary relay device, start a primary-backup switching timer, and if a last acquired priority value of the backup relay device is greater than a last acquired priority value of the primary relay device before the primary-backup switching timer expires, switch between the primary relay device and the backup relay device; or,
if the priority value of the backup relay device is greater than the priority value of the primary relay device, start the primary-backup switching timer; if the acquired priority value of the backup relay device is always greater than the acquired priority value of the primary relay device before the primary-backup switching timer expires, switch between the primary relay device and the backup relay device.

16. The apparatus according to claim 14, wherein the switching module is specifically to:
send a Request packet to the backup relay device;
if the Membership Query packet sent by the backup relay device is received, send a Membership Update packet to the backup relay device, and stop a periodic query keep-alive timer for the primary relay device, wherein the periodic query keep-alive timer expires when the second preset duration is reached;
if no Membership Query packet sent by the primary relay device is received within a third preset duration, delete information about an AMT tunnel with the primary relay device.

17. The apparatus according to claim 16, wherein
the switching module is further to send a Relay Discovery packet to the primary relay device every other first preset duration;
the switching module is further to send a Request packet to the backup relay device every other second preset duration.

18. The apparatus according to claim 14, wherein the Membership Query packet comprises a first flag bit field and a priority field, and when the first flag bit field takes a first value, it indicates that the priority field carries the priority value of the primary relay device.

19. The apparatus according to claim 18, wherein the Membership Query packet further comprises a second flag bit field;
if the second flag bit field takes the first value, it indicates that the priority field is located behind and adjacent to a gateway address field;
if the second flag bit field takes a second value, it indicates that the priority field is located behind and adjacent to encapsulation information of an ordinary query message.

20. The apparatus according to claim 14, wherein the Relay Advertisement packet comprises a priority field, which is used to carry the priority value of the backup relay device.

21. The apparatus according to claim 18 or 20, wherein the priority field occupies 8 reserved bits, and when the priority field takes a value of 0, it indicates that the priority field does not carry a priority value.

22. The apparatus according to claim 12, wherein the priority value of a relay device is determined based on health parameters of the relay device, wherein the health parameters comprise any one or more of the following:
the number of accessible multicast sources;
network quality with the multicast source(s);
failure ratio(s) of transmission path(s) with the multicast source(s);
routing link quality with the multicast source(s).

23. A gateway device, comprising:
a processor;
a transceiver;
a machine-readable storage medium having stored therein machine-executable instructions that can be executed by the processor to cause the processor to perform following operations of:
acquiring a priority value of a primary relay device and a priority value of a backup relay device, wherein the priority value of a relay device is used for representing multicast service quality of the relay device;
if a relationship between the priority value of the primary relay device and the priority value of the backup relay device meets a preset switching condition, switching between the primary relay device and the backup relay device.

24. The gateway device according to claim 23, wherein the machine-executable instructions further cause the processor to perform following operations of:
after the gateway device is online, sending Relay Discovery packets to a plurality of relay devices respectively through the transceiver, wherein each of the Relay Discovery packets comprises a different anycast address;
if a Relay Advertisement packet sent by a relay device is received within a first preset duration through the transceiver, taking the relay device that sent the Relay Advertisement packet as the primary relay device; or, if a plurality of Relay Advertisement packets sent by a plurality of relay devices are received within the first preset duration through the transceiver, selecting a relay device from the plurality of relay devices as the primary relay device, wherein the Relay Advertisement packet sent by the primary relay device carries a maximum priority value;
establishing an AMT tunnel with the primary relay device.

25. The gateway device according to claim 23, wherein the machine-executable instructions further cause the processor to perform following operations of:
sending a Request packet to the primary relay device through the transceiver every other second preset duration ;
receiving a Membership Query packet sent by the primary relay device through the transceiver, wherein the Membership Query packet comprises the priority value of the primary relay device;
sending a Relay Discovery packet to the backup relay device through the transceiver every other first preset duration;
receiving a Relay Advertisement packet sent by the backup relay device through the transceiver, wherein the Relay Advertisement packet comprises the priority value of the backup relay device.

26. The gateway device according to claim 25, wherein the machine-executable instructions further cause the processor to perform following operations of:
if the priority value of the backup relay device is greater than the priority value of the primary relay device, switching between the primary relay device and the backup relay device; or,
if the priority value of the backup relay device is greater than the priority value of the primary relay device, starting a primary-backup switching timer, and if a last acquired priority value of the backup relay device is greater than a last acquired priority value of the primary relay device before the primary-backup switching timer expires, switching between the primary relay device and the backup relay device; or,
if the priority value of the backup relay device is greater than the priority value of the primary relay device, starting the primary-backup switching timer; if the acquired priority value of the backup relay device is always greater than the acquired priority value of the primary relay device before the primary-backup switching timer expires, switching between the primary relay device and the backup relay device.

27. The gateway device according to claim 25, wherein the machine-executable instructions further cause the processor to perform following operations of:
sending a Request packet to the backup relay device through the transceiver;
if the Membership Query packet sent by the backup relay device is received through the transceiver, sending a Membership Update packet to the backup relay device through the transceiver, and stopping a periodic query keep-alive timer for the primary relay device, wherein the periodic query keep-alive timer expires when the second preset duration is reached;
if no Membership Query packet sent by the primary relay device is received through the transceiver within a third preset duration, deleting information about an AMT tunnel with the primary relay device.

28. The gateway device according to claim 27, wherein the machine-executable instructions further cause the processor to perform following operations of:
sending a Relay Discovery packet to the primary relay device through the transceiver every other first preset duration;
wherein the machine-executable instructions further cause the processor to perform a following operation of:
sending a Request packet to the backup relay device through the transceiver every other second preset duration.

29. The gateway device according to claim 25, wherein the Membership Query packet comprises a first flag bit field and a priority field, and when the first flag bit field takes a first value, it indicates that the priority field carries the priority value of the primary relay device.

30. The gateway device according to claim 29, wherein the Membership Query packet further comprises a second flag bit field;
if the second flag bit field takes the first value, it indicates that the priority field is located behind and adjacent to a gateway address field;
if the second flag bit field takes a second value, it indicates that the priority field is located behind and adjacent to encapsulation information of an ordinary query message.

31. The gateway device according to claim 25, wherein the Relay Advertisement packet comprises a priority field, which is used to carry the priority value of the backup relay device.

32. The gateway device according to claim 29 or 31, wherein the priority field occupies 8 reserved bits, and when the priority field takes a value of 0, it indicates that the priority field does not carry a priority value.

33. The gateway device according to claim 23, wherein the priority value of a relay device is determined based on health parameters of the relay device, wherein the health parameters comprise any one or more of the following:
the number of accessible multicast sources;
network quality with the multicast source(s);
failure ratio(s) of transmission path(s) with the multicast source(s);
routing link quality with the multicast source(s).

34. A machine-readable storage medium having stored therein machine-executable instructions that, when called and executed by a processor, cause the processor to implement the method according to any one of claims 1 to 11.

35. A computer program product, which causes a processor to implement the method according to any one of claims 1 to 11.
